# EUROPÄISCHE PATENTANMELDUNG

(11) **EP 4 275 780 A1**
(43) Veröffentlichungstag der Anmeldung: **15.11.2023**
(21) Anmeldenummer: 22172942.9
(22) Anmeldetag: 12.05.2022
(51) Int. Cl.: B01D 46/00

(54) **FILTER MIT VERSIEGELTEM KANTENBAND**

(71) Anmelder: Carl Freudenberg KG, 69469 Weinheim (DE)
(72) Erfinder: HAEFNER, Uwe, 77694 Kehl (DE); Bräunling, Volker, 64646 Heppenheim (DE); Bastan, Güngör, 63303 Dreeich (DE); Ünen, Ilker, 67574 Osthofen (DE)

(57) **Zusammenfassung**

Die Erfindung betrifft einen Filter (100) zur Filtration eines Fluidstroms (L), aufweisend ein Gehäuse (9) und ein im Gehäuse (9) aufgenommenes Filterelement (10), wobei das Filterelement (10) ein einen Faltenbalg (1) bildendes mit Falten versehenes Filtermedium (8) aufweist, und der Faltenbalg (1) mit mindestens einem Kantenband (2) versehen ist. Erfindungsgemäß weist das Kantenband (2) zumindest auf seiner dem Gehäuse zugewandten Stirnkante (5) eine luftundurchlässige Versiegelung (8) auf.

Es wurde bei Versuchen überraschend festgestellt, dass bereits die Versiegelung dieses kleinen Bereichs zu einer vorteilhaften Verringerung der Leckagerate geführt hat

## Beschreibung

Die Erfindung betrifft einen Filter zur Filtration eines Fluidstroms, aufweisend ein Gehäuse und ein im Gehäuse aufgenommenes Filterelement, wobei das Filterelement ein Filtermedium aufweist, welches einen Faltenbalg bildet und dazu mit Falten versehen ist, und wobei der Faltenbalg mit mindestens einem Kantenband versehen ist.

### Stand der Technik

Aus dem Stand der Technik sind zahlreiche Lösungen zur Fitration von Fluidströmen bekannt. Häufig kommen dabei plissierte Filtermedien zum Einsatz. Die EP 3 332 858 A1 zeigt ein Filterelement mit einem mit Falten versehenen Filtermedium, welches also plissiert ist, und einen Faltenbalg bildet. An seinen seitlichen Flächen ist der Faltenbalg mit einem Kantenband versehen. Das Filterelement kann in einen Rahmen eingesetzt werden, welcher im Stand der Technik häufig aus Kunststoff hergestellt ist, um eine kraft- bzw. reibschlüssige Abdichtung zwischen Filterelement und Rahmen zu gewährleisten. Kantenbänder werden häufig aus Vliesstoff gefertigt und somit aus einem zumindest teilweise luftdurchlässigen Material mit einer strukturierten Oberfläche.

Wegen dieser strukturierten, rauen Oberfläche kann das Kantenband mit seiner Stirnkante, die auf dem Gehäuse aufliegt, nicht luftdicht abschließen. Daher besteht im Bereich dieser Stirnkante eine Leckage.

Wegen der Luftdurchlässigkeit des Materials des Kantenbandes kann auch Luft durch das Kantenband hindurchtreten, was eine zusätzliche Leckage bewirkt.

Um die Leckagerate zu verringern ist es aus dem Stand der Technik bekannt, dass zwischen Filter und Filtergehäuse zusätzliche Dichtelemente angebracht werden können, z.B. Dichtschäume oder Dichtschnüre. Nachteilig daran ist zum einen der zusätzliche montagetechnische Aufwand als auch im Fall von Dichtschäumen deren ggfs. kritischen Umweltauswirkungen.

Auf Grund von Vorgaben und Richtlinien zur Luftqualität in Innenräumen kommen zur Filtration von Fahrzeuginnenluft Filter mit immer höheren Filtereffizienzen zum Einsatz. Damit dies tatsächlich in einer höheren Luftqualität im Fahrzeuginnenraum resultiert, wird eine geringe Leckagerate damit zunehmend relevanter.

### Aufgabenstellung

Aufgabe der vorliegenden Erfindung ist es, einen Filter zu schaffen, welcher eine geringe Leckagerate aufweist und die Nachteile des Standes der Technik zumindest teilweise behebt.

### Technische Lösung

Gelöst wird diese Aufgabe durch einen Filter mit den Merkmalen von Anspruch 1. Erfindungsgemäß wurde als vorteilhaft erkannt, die Aufgabe durch eine spezielle Ausgestaltung des Kantenbandes zu lösen, nämlich durch ein Kantenband mit einer partiellen Versiegelung.

Der erfindungsgemäße Filter dient der Filtration eines Fluidstromes und besitzt ein Gehäuse und ein im Gehäuse aufgenommenes Filterelement. Das Filterelement weist ein Filtermedium auf, welches einen Faltenbalg bildet und dazu mit Falten versehen ist, insbesondere plissiert ist. Wenn ein Fluid, insbesondere Luft, das Filtermedium in Durchströmungsrichtung durchströmt wird es gefiltert. Der Faltenbalg ist auf mindestens einer seiner Seitenflächen mit mindestens einem Kantenband versehen. Alternative Begriffe für "Kantenband" sind auch "Seitenstreifen" oder "Kantenstreifen". Das Kantenband ist ein Band bzw. Streifen aus einem flächigen Material.

Bei der Montage des Filterelements in das Gehäuse wird das Filterelement unter Beachtung der Durchströmungsrichtung in das Gehäuse eingeschoben bzw. eingesetzt.

Erfindungsgemäß weist das mindestens eine Kantenband zumindest auf seiner dem Gehäuse zugewandten Stirnkante, also an seiner abstömseitigen bzw. reinluftseitigen Stirnkante, eine luftundurchlässige Versiegelung auf. Die Stirnkante kann auch als Schnittkante bezeichnet werden. Diese Stirnkante bildet die Auflagefläche bzw. Aufstandsfläche des Filterelements auf dem Gehäuse. Es wurde bei Versuchen überraschend festgestellt, dass bereits die Versiegelung dieses kleinen Bereichs zu einer erheblichen Verringerung der Leckagerate geführt hat.

Luftundurchlässig meint hier eine Luftdurchlässigkeit kleiner 500l/m²s bei 200Pa, also 2mbar, gemessen nach DIN EN ISO 9237.

Im Rahmen der Erfindung sind unterschiedliche Varianten von Versiegelungen möglich.

In vorteilhafter Weiterbildung des Filters ist das Kantenband auch an seiner dem Faltenbalg zugewandten Innenfläche zumindest teilweise mit einer Versiegelung versehen.

Insbesondere kann sich die Versiegelung auf der Innenfläche des Kantenbandes auf den Bereich zwischen der dem Gehäuse zugewandten Stirnkante und dem Faltenbalg erstrecken, also auf den Bereich, in welchem der Faltenbalg nicht mit dem Kantenband verbunden ist. Dadurch kann die Leckagerate weiter reduziert werden.

Alternativ könnte sich die Versiegelung auch auf die gesamte Innenfläche des Kantenbandes erstrecken. Dies ist dann sinnvoll, wenn der Faltenbalg nicht durch einen flächigen Klebstoffauftrag mit dem Kantenband verbunden ist.

Um das Kantenband am Faltenbalg zu befestigen, kann es insbesondere auf diesen aufgeklebt oder mit diesem verschweißt sein.

In vorteilhafter Weiterbildung des Filters ist das mindestens eine Kantenband aus einem flexiblen textilen Material, wie einem flexiblen Vliesstoff, einem sogenannten Flexband. Ein flexibles textiles Material - im Gegensatz zu einem starren Material - lässt sich einfach reversibel verbiegen.

Dann sind auch Filterelemente möglich, welche nicht in einer Ebene liegen und z.B. Krümmungen aufweisen.

Besonders vorteilhaft ist es, wenn auch das Filtermedium als Material Vliesstoff aufweist, da Vliesstoff ein leichtes Material mit guten Filter- und Fertigungseigenschaften darstellt. Besitzt das Filtermedium mehrere Lagen, so kann mindestens eine Lage aus Vliesstoff gebildet sein.

In einer ersten Ausführungsvariante des Filters ist die Versiegelung des Kantenbands durch eine Benetzung bzw. Beschichtung gebildet wird und als Benetzungs- bzw. Beschichtungsmittel wird ein polymerer Werkstoff verwendet, insbesondere ein Bindemittel., ein Klebstoff, ein Silikon oder Kautschuk (z.B. Latex), welcher eine luftundurchlässige Schicht ausbildet. Die Versiegelung wird in diesem Fall durch eine Benetzung bzw. Beschichtung realisiert, welche in vorteilhafter Weise schnell, einfach und automatisiert aufgebracht werden kann.

In einer zweiten Ausführungsvariante des Filters ist die Versiegelung des Kantenbands durch lokales thermisches Erhitzen des Kantenbandes im Bereich der gewünschten Versiegelung realisiert ist, z.B. unter Verwendung eines Lasers welcher den Bereich der gewünschten Versiegelung beaufschlagt oder unter Verwendung eines beheizten Stempels, welcher in den Bereich eingeprägt wird. Dadurch wird das Kantenband in diesem Bereich luftundurchlässig.

In einer dritten Ausführungsvariante des Filters ist die Versiegelung des Kantenbands durch Verwendung eines in seiner Struktur lokal modifizierten textilen Materials realisiert. Lokal modifiziert meint, dass das Material zumindest im Bereich der Versiegelung eine - im Unterschied zum restlichen Kantenstreifen - andere Struktur aufweist und kann z.B. feinere Fasern aufweisen oder eine mechanisch verdichtete Faserstruktur besitzen, welche durch Vernadeln oder Kalandrieren erzeugt sein kann. Neben einer mechanischen Behandlung ist auch eine chemische Behandlung denkbar, welche im Unterschied zur o.g. Beschichtung bzw. Benetzung in die Struktur des Kantenbandes eingreift, z.B. ein Imprägnieren oder Tränken.

Das Filterelement kann so ausgestaltet sein, dass zwei Kantenbänder vorgesehen sind, welche an den beiden sich gegenüberliegenden Stirnflächen des gefalteten Filtermediums angeordnet sind. Ein solches Filterelement wird als Filterelement mit 2-seitigem Kantenstreifen bezeichnet.

Das Filterelement kann alternativ so ausgestaltet sein, dass das Kantenband oder mehrere Kantenbänder um den Faltenbalg herum angeordnet sind, derart, dass der Faltenbalg von dem Kantenband bzw. den Kantenbändern eingerahmt wird, wobei im Falle eines rechteckigen Faltenbalgs insbesondere vier Kantenbänder vorgesehen sind, welche an den beiden sich gegenüberliegenden Stirnflächen des gefalteten Filtermediums sowie an den beiden Endfalten des Faltenbalgs angeordnet sind. Ein solches Filterelement wird als Filterelement mit 4-seitigem Kantenstreifen bezeichnet.

Der erfindungsgemäße Filter kann insbesondere als Innenraum-Luftfilter in Fahrzeugen, wie z.B. Autos, PKW, NKW, Zügen oder Schiffen verwendet werden.

Hinsichtlich weiterer Vorteile und in konstruktiver und funktioneller Hinsicht vorteilhafter Ausgestaltungen der Erfindung wird auf die Unteransprüche sowie die Beschreibung von Ausführungsbeispielen unter Bezugnahme auf die beiliegenden Figuren verwiesen.

Die beschriebene Erfindung und die beschriebenen vorteilhaften Weiterbildungen der Erfindung stellen auch in Kombination miteinander - soweit dies technisch sinnvoll ist - vorteilhafte Weiterbildungen der Erfindung dar.

### Ausführungsbeispiel

Die Erfindung soll anhand beigefügter Figuren noch näher erläutert werden. Einander entsprechende Elemente und Bauteile sind in den Figuren mit gleichen Bezugszeichen versehen. Zugunsten einer besseren Übersichtlichkeit der Figuren wurde auf eine maßstabsgetreue Darstellung verzichtet.

Es zeigen in schematischer Darstellung
- Fig. 1: ein Filterelement in perspektivischer Ansicht
- Fig. 2a: einen Ausschnitt des erfindungsgemäßen Filters in einer ersten Variante
- Fig. 2b: einen Ausschnitt des erfindungsgemäßen Filters in einer zweiten Variante

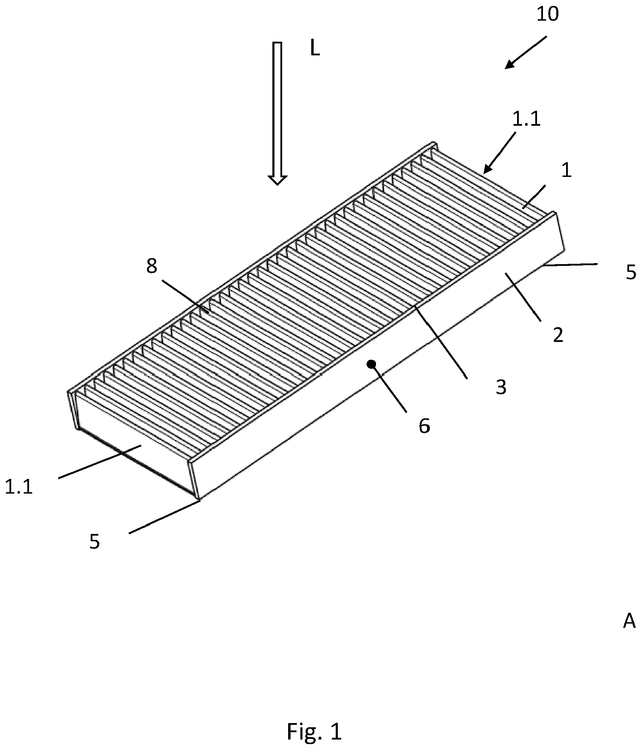

Fig. 1 zeigt ein Filterelement 10 mit einem Faltenbalg 1. Der Faltenbalg 1 wird durch ein mit Falten versehenes, plissiertes Filtermedium 7 gebildet. Durch das Vorsehen der Vielzahl von Falten kann die Filtrationsfläche des Filterelements 10 vergrößert werden. Zur Reinigung eines Fluids strömt dieses in Durchströmungsrichtung L durch das Filtermedium 7 des Filterelements 10 hindurch. An seinen beiden Seitenflächen 6 ist das Filterelement 10 mit jeweils einem Kantenband 2 versehen, welche an den beiden Stirnflächen des gefalteten Filtermediums 7 angeordnet sind. Ein jeweiliges Kantenband 2 besitzt eine anströmseitige Stirnkante 3 und eine abströmseitige Stirnkante 5, eine Innenfläche 4 (nicht sichtbar) und eine Außenfläche 6. Ein solches Filterelement 10 kann in ein hier nicht dargestelltes Gehäuse 9 eingesetzt werden.

In einer hier nicht dargestellten Ausführungsvariante könnten zusätzlich auch Kantenbänder 2 an den beiden Endfalten 1.1 angebracht sein. Alternativ könnte auch ein Kantenband 2 vorgesehen sein, welches den Faltenbalg 1 rahmenartig umfasst.

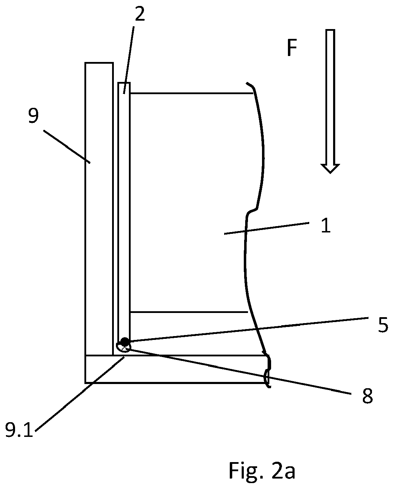

Fig. 2a zeigt einen Ausschnitt des erfindungsgemäßen Filters 100 in einer ersten Variante.

Das Filterelement 10 des Filters 100 wird in einem Gehäuse 9 aufgenommen. Die Durchströmungsrichtung des Fluidstroms ist mit einem Pfeil L gekennzeichnet. Der Faltenbalg 1 ist mit mindestens einem Kantenband 2 versehen, welches auf seiner dem Gehäuse 9 zugewandten Stirnkante 5 eine luftundurchlässige Versiegelung 8 aufweist. Die Versiegelung 8 befindet sich also auf der stromabwärtigen Stirnkante 5 des Kantenbandes 2 und kontaktiert die Auflagefläche 9.1, wenn das Filterelement 10 sich in montierter Position in dem Gehäuse 2 befindet. Dadurch kann eine Leckage in diesem Bereich vermieden oder zumindest stark reduziert werden.

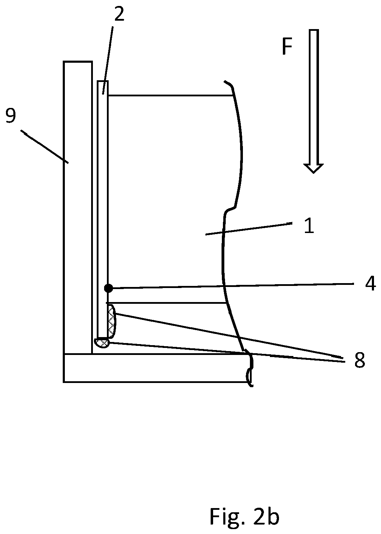

Fig. 2b zeigt einen Ausschnitt des erfindungsgemäßen Filters 100 in einer zweiten Variante. Zusätzlich zur luftundurchlässigen Versiegelung 8 an der Stirnkante 5 des Kantenbandes 2 ist auch eine Versiegelung 8 an der dem Faltenbalg 1 zugewandten Innenfläche 4 des Kantenbandes angebracht, welche sich auf den Bereich zwischen der dem Gehäuse 9 zugewandten Stirnkante 5 und der Unterkante des Faltenbalgs 1 erstreckt. Dadurch kann auch eine Leckage in diesem Bereich vermieden oder zumindest stark reduziert werden.

### Bezugszeichenliste

- 1: Faltenbalg
- 1.1: Endfalte
- 2: Kantenband
- 3: Stirnkante Kantenband (anströmseitig)
- 4: Innenfläche Kantenband
- 5: Stirnkante Kantenband (abströmseitig)
- 6: Außenfläche Kantenband
- 7: Filtermedium
- 8: Versiegelung
- 9: Gehäuse
- 9.1: Auflagefläche des Gehäuses
- 10: Filterelement

- L: Durchströmungsrichtung

## Patentansprüche

1. Filter (100) zur Filtration eines Fluidstroms (L), aufweisend ein Gehäuse (9) und ein im Gehäuse (9) aufgenommenes Filterelement (10), wobei das Filterelement (10) ein einen Faltenbalg (1) bildendes mit Falten versehenes Filtermedium (8) aufweist, und der Faltenbalg (1) mit mindestens einem Kantenband (2) versehen ist, **dadurch gekennzeichnet,**
**dass** das Kantenband (2) zumindest auf seiner dem Gehäuse zugewandten Stirnkante (5) eine luftundurchlässige Versiegelung (8) aufweist.

2. Filter nach Anspruch 1, **dadurch gekennzeichnet, dass**
das Kantenband (2) auch an seiner dem Faltenbalg (1) zugewandten Innenfläche (4) zumindest teilweise mit einer Versiegelung (8) versehen ist.

3. Filter nach Anspruch 2, **dadurch gekennzeichnet, dass**
sich die Versiegelung (8) auf der Innenfläche (4) des Kantenbandes (2) auf den Bereich zwischen der dem Gehäuse (9) zugewandten Stirnkante (5) und dem Faltenbalg (1) erstreckt.

4. Filter nach einem der vorangehenden Ansprüche, **dadurch gekennzeichnet, dass**
das Kantenband (2) aus einem textilen Material gefertigt ist, insbesondere aus einem flexiblen Vliesstoff.

5. Filter nach einem der vorangehenden Ansprüche, **dadurch gekennzeichnet, dass**
die Versiegelung des Kantenbands (2) durch eine Benetzung bzw. Beschichtung gebildet ist.

6. Filter nach einem der Ansprüche 1 - 6, **dadurch gekennzeichnet, dass** die Versiegelung des Kantenbands (2) durch lokales thermisches Erhitzen realisiert ist.

7. Filter nach Anspruch 6, **dadurch gekennzeichnet, dass**
die Versiegelung des Kantenbands (2) durch Verwendung eines zumindest lokal in seiner Struktur modifizierten textilen Materials erfolgt.

8. Filter nach einem der vorangehenden Ansprüche, **dadurch gekennzeichnet, dass**
zwei Kantenbänder (2) vorgesehen sind, welche an den beiden Stirnflächen des gefalteten Filtermediums (8) angeordnet sind

9. Filter nach einem der Ansprüche 1 - 5, **dadurch gekennzeichnet, dass** das Kantenband (2) oder mehrere Kantenbänder (2) um den Faltenbalg (1) angeordnet sind, derart, dass der Faltenbalg (1) von dem Kantenband (2) bzw. den Kantenbändern (2) eingerahmt wird, und dass insbesondere vier Kantenbänder (2) vorgesehen sind, welche an den beiden Stirnflächen des gefalteten Filtermediums (8) sowie an den beiden Endfalten (1.1) des Faltenbalgs (1) angeordnet sind.
